# EUROPEAN PATENT SPECIFICATION

(11) **EP 4 432 456 B1**
(45) Date of publication and mention of the grant of the patent: **26.11.2025**
(21) Application number: 22912025.8
(22) Date of filing: 23.12.2022
(51) Int. Cl.: H01M 50/54, B23K 20/10, B23K 101/38

(54) **ELECTRODE TAB WELDING DEVICE AND ELECTRODE TAB WELDING METHOD**
ELEKTRODENLASCHENSCHWEISSVORRICHTUNG UND ELEKTRODENLASCHENSCHWEISSVERFAHREN
DISPOSITIF DE SOUDAGE DE LANGUETTE D'ÉLECTRODE ET PROCÉDÉ DE SOUDAGE DE LANGUETTE D'ÉLECTRODE

(30) Priority: 23.12.2021 KR 20210186535
(43) Date of publication of application: 18.09.2024
(73) Proprietor: LG Energy Solution, Ltd., Seoul 07335 (KR)
(72) Inventor: KIM, Won Nyeon, Daejeon 34122 (KR); KIM, Hyun Tae, Daejeon 34122 (KR); JUN, In Kook, Daejeon 34122 (KR); JO, Han Joo, Daejeon 34122 (KR); JEON, Jae Beom, Daejeon 34122 (KR)
(74) Representative: Plasseraud IP
(86) International application number: PCT/KR2022/021189
(87) International publication number: WO 2023/121392

(56) References cited:
- JP-A- H08 250 103
- KR-A- 20140 015 647
- KR-A- 20180 072 065
- KR-A- 20190 054 617
- KR-A- 20200 105 272
- KR-A- 20210 021 871
- US-A1- 2019 260 008
- US-A1- 2021 305 620

## Description

### TECHNICAL FIELD

The present invention relates to an electrode tab welding device, which welds a plurality of electrode tabs to each other and an electrode tab welding method, see e.g. KR 2020 0105272 A and KR 2018 0072065 A.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles, or the like. In particular, lithium secondary batteries have a larger capacity and a higher energy density than nickel-cadmium batteries or nickel-hydrogen batteries, and thus utilization thereof is on a rapidly increasing trend.

According to the shape of a battery case, the secondary batteries may be classified into a cylindrical type battery and a prismatic type battery, each of which has an electrode assembly embedded in a cylindrical or prismatic metal can, a pouch type battery having an electrode assembly embedded in a pouch type case made of an aluminum laminate sheet, and so on.

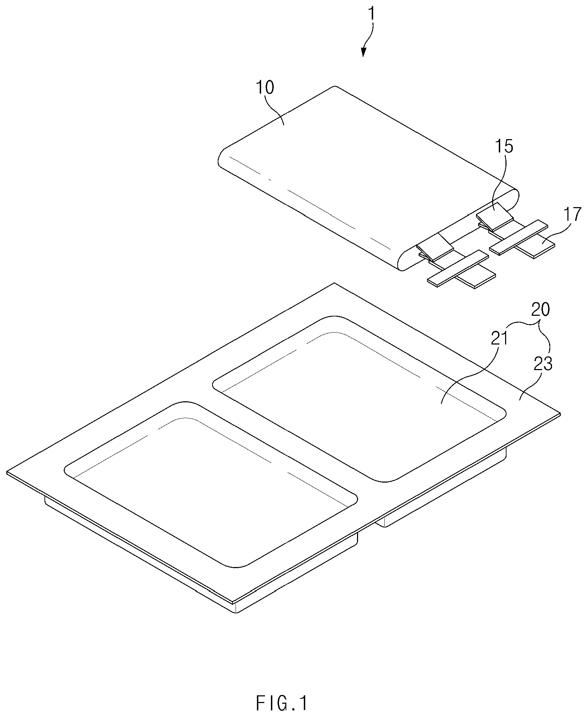

FIG. 1 is a view illustrating an example of a pouch type secondary battery. A pouch type secondary battery 1 includes an electrode assembly 10, in which an electrode and a separator are provided to be alternately stacked, and a pouch 20 in which the electrode assembly 10 is accommodated. Each of electrode tabs 15 may be connected to the electrode of the electrode assembly 10. The electrode tabs 15 may be welded to each other in a predetermined region and then connected to an electrode lead 17. The pouch 20 includes a cup part 21 having a recessed shape for accommodating the electrode assembly 10. The cup part 21 of the pouch 20 may be provided in one or two. FIG. 1 illustrates the pouch 20 including a left cup part and a right cup part. A circumferential part 23 (terrace) is formed around a circumference of the cup part 21 by sealing.

However, the electrode tab 15 may be gradually tightened and disconnected when a pulling force is applied to the electrode tab 15 due to deformation of the circumferential part 23 of the pouch 20. In addition, the electrode tab 15 may be gradually tightened and disconnected also when the pulling force is applied to the electrode tab 15 due to swelling of the pouch 20. Such disconnection is cited as a leading cause of an occurrence of a fire. Recently, the pouch type secondary battery is reduced in length of the circumferential part 23 in order to increase energy density according to a demand for a large capacity and high performance. However, this leads to a decrease of the "length of the electrode tab 15, from the electrode assembly 10 to a welding point of the electrode tabs 15", and thus a risk of the disconnection is further increased.

Examples of electrode assemblies are disclosed in documents JP H08 250103 A, US 2021/305620 A1 and US 2019/260008 A1.

### DISCLOSURE OF THE INVENTION

### TECHNICAL PROBLEM

An object of the present invention for solving the above problems is to provide an electrode tab welding device and an electrode tab welding method, which prevent disconnection of an electrode tab.

### TECHNICAL SOLUTION

To this end, the invention relates to an electrode tab welding device according to claim 1.

The electrode tab welding device after the invention may present one or more feature(s) from dependent claims 2 to 6, in any combination allowed by the claims.

The invention also relates to an electrode tab welding method according to claim 7.

The electrode tab welding method after the invention may present one or more feature(s) from dependent claims 8 to 10, in any combination allowed by the claims.

### ADVANTAGEOUS EFFECTS

According to the preferred embodiments of the present invention, the welding part may weld the plurality of electrode tabs to each other in the state in which the plurality of electrode tabs are pushed toward the electrode assembly by the aligning rollers, and thus, each of the electrode tabs, particularly the outermost electrode tab, may have the increased length from the electrode to the welded portion. Accordingly, the electrode tab, particularly the outermost electrode tab, may be prevented from being broken and disconnected by the external force due to the deformation such as the bending of the electrode lead, and the safety and the reliability of the electrode assembly may be improved.

In addition, the effects may be included which could be easily predicted by those skilled in the art from the configurations according to the preferred embodiments of the present invention.

### BRIEF DESCRIPTION OF THE DRAWINGS

The following drawings attached in this specification illustrate a preferred embodiment of the present invention. The present invention should not be construed as being limited to only the drawings.
FIG. 1 is a view illustrating an example of a pouch type secondary battery.
FIGS. 2a to 2d are views for explaining one example of a process applicable to welding of electrode tabs of a pouch type secondary battery.
FIG. 3 is a cross-sectional view illustrating a portion of a battery module provided with several pouch type batteries accommodated in a pouch.
FIGS. 4 to 6 are views for explaining a configuration and an operation of an electrode tab welding device according to an embodiment of the present invention.
FIG. 7 is a flowchart of an electrode tab welding method according to another embodiment of the present invention.
FIG. 8 is view illustrating an electrode assembly.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe his or her invention in the best ways.

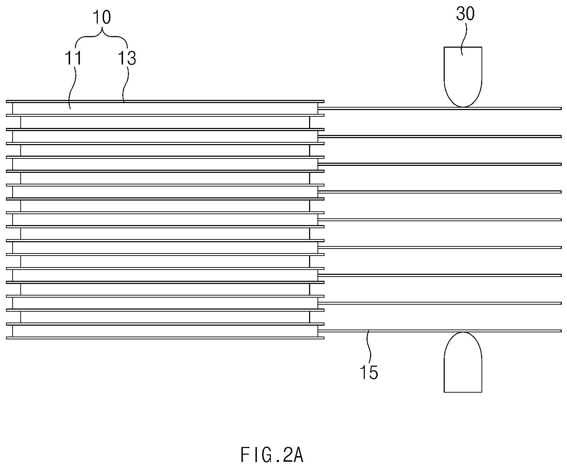

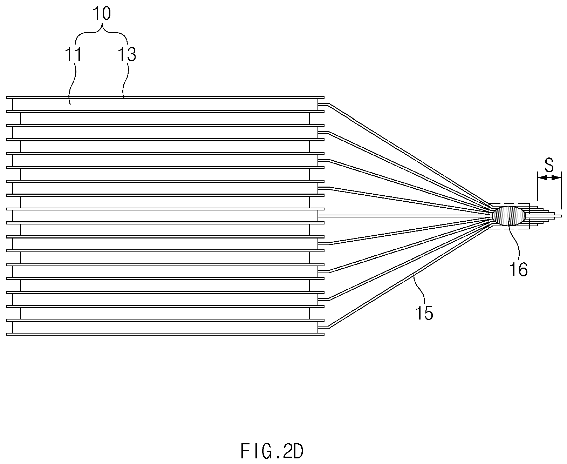

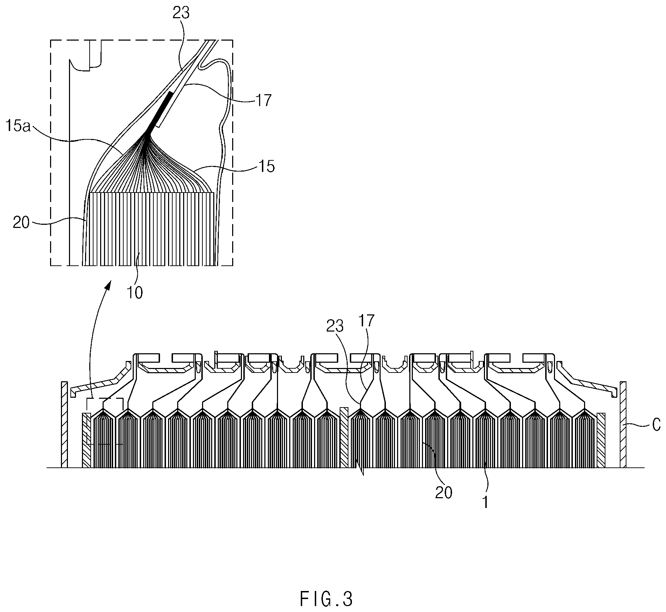

FIGS. 2a to 2d are views for explaining one example of a process applicable to welding of electrode tabs of a pouch type secondary battery. FIG. 3 is a cross-sectional view illustrating a portion of a battery module provided with several pouch type batteries accommodated in a pouch.

First, as in FIG. 2a, an electrode assembly 10 may be prepared in which a plurality of electrodes 11 and a plurality of separators 13 are alternately stacked. The plurality of electrodes 11 may include a positive electrode and a negative electrode, and an electrode tab 15 may be connected to each of the electrodes 11. Although the drawings illustrate only a negative electrode tab connected to the negative electrode for convenience of explanation, it could be easily understood by those skilled in the art that a positive electrode tab connected to the positive electrode may be also provided in the electrode assembly 10 and welded in the same manner as the negative electrode tab.

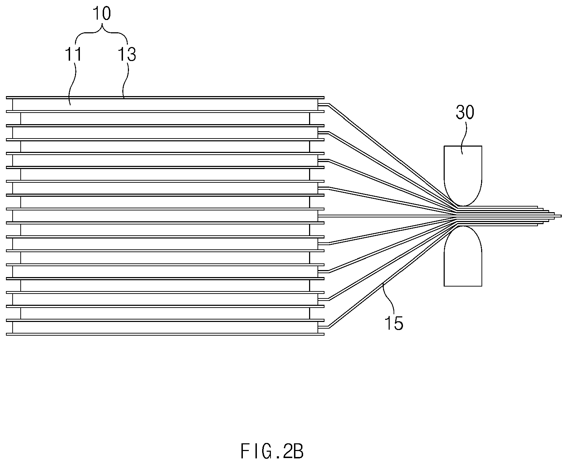

Next, as in FIG. 2b, a pair of tab guides 30 may press the plurality of electrode tabs 15 so as to gather the plurality of electrode tabs 15. The pair of tab guides 30 may face each other with the plurality of electrode tabs 15 therebetween in a height direction of the electrode assembly 10, and a distance therebetween may be adjusted.

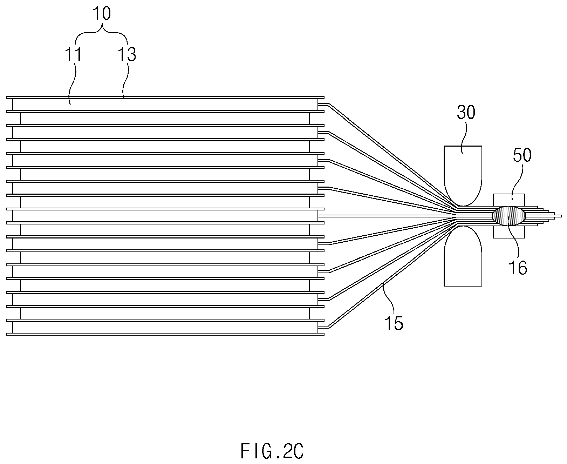

Then, as in FIG. 2c, the plurality of electrode tabs 15 may be welded to each other through a welding part 50. In more detail, the welding part 50 may weld the plurality of electrode tabs 15 to each other and form a welded portion 16. The welded portion 16 formed in the plurality of electrode tabs 15 may be farther away from the electrode assembly 10 than a point at which the plurality of electrode tabs 15 are pressed by the pair of tab guides 30 is.

The electrode assembly 10 including the plurality of electrode tabs 15 welded to each other in the welded portion 16 may be manufactured through those processes. A pouch type battery 1 may be manufactured by connecting the electrode lead 17 (see FIG. 1) to the plurality of electrode tabs 15 welded to each other and then, accommodating the electrode assembly 10 in the pouch 20 (see FIG. 1).

As illustrated in FIG. 3, a plurality of pouch type batteries 1 may be accommodated in a case C and manufactured as a battery module. However, a circumferential part 23 of the pouch 20 may be bent during the manufacture of the battery module. The deformation of the circumferential part 23 may cause bending of the electrode lead 17 and thus, a pulling force may be applied to the electrode tab 15 connected to the electrode lead 17. This force may pull the electrode tab 15 tightly to cause disconnection of the electrode tab 15, and the outermost electrode tab 15a may be more affected. The problem of the disconnection as above may be also caused by swelling of the pouch type battery 1.

The present invention to be described in detail below is intended to solve the problem of the disconnection as above.

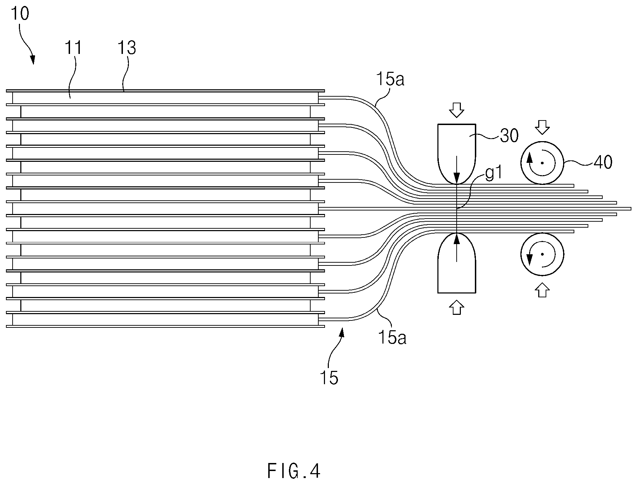

FIGS. 4 to 6 are views for explaining a configuration and an operation of an electrode tab welding device according to an embodiment of the present invention.

The electrode tab welding device according to an embodiment of the present invention may weld a plurality of electrode tabs 15 of an electrode assembly 10 to each other. In more detail, the electrode tab welding device includes a pair of tab guides 30 that gather a plurality of electrode tabs 15, a pair of aligning rollers 40 that rotate in a direction, in which the electrode tabs 15 are pushed toward the electrode assembly 10, while pressing the electrode tabs 15 gathered by the pair of tab guides 30, and a welding part 50 that welds the plurality of electrode tabs 15, which are aligned by the pair of aligning rollers 40, to each other.

The pair of tab guides 30 may face each other with the plurality of electrode tabs 15 therebetween in a height direction of the electrode assembly 10. The pair of tab guides 30 may be configured so that a distance therebetween can be adjusted. In more detail, at least one of the pair of tab guides 30 may be configured to be movable up and down in the height direction of the electrode assembly 10.

As illustrated in FIG. 4, the pair of tab guides 30 may approach each other so as to gather the plurality of electrode tabs 15. During this process, the pair of tab guides 30 may be in contact with a pair of the outermost electrode tabs 15a, respectively, among the plurality of electrode tabs 15.

The smaller a gap between the pair of tab guides 30 is, the more strongly the pair of tab guides 30 may press the plurality of electrode tabs 15.

The pair of aligning rollers 40 may face each other with the plurality of electrode tabs 15 therebetween in the height direction of the electrode assembly 10. The pair of aligning rollers 40 may be configured so that a distance therebetween can be adjusted. In more detail, at least one of the pair of aligning rollers 40 may be configured to be movable up and down in the height direction of the electrode assembly 10.

As illustrated in FIG. 4, the pair of aligning rollers 40 may rotate in a state of pressing the plurality of electrode tabs 15 gathered by the pair of tab guides 30. In more detail, the pair of aligning rollers 40 may be in contact with the pair of the outermost electrode tabs 15a, respectively, and may rotate in a direction in which the outermost electrode tabs 15a are pushed toward the electrode assembly 10.

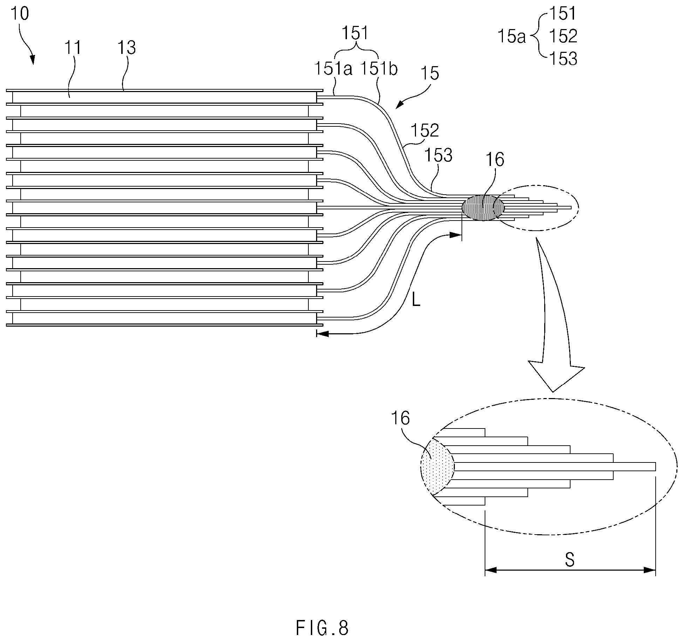

The plurality of electrode tabs 15 may be pushed toward the electrode assembly 10 by a frictional force therebetween. The more outward the electrode tab 15 is disposed, the more pushed the electrode tab 15 may be toward the electrode assembly 10. Accordingly, a stepped portion S (see FIG. 8) between outer ends of the plurality of electrode tabs 15 may occur. That is, the pair of aligning rollers 40 may align the plurality of electrode tabs 15 so that the stepped portion between the outer ends of the plurality of electrode tabs 15 occur.

Each of the aligning rollers 40 may have a material that has a high surface friction coefficient and is elastic. In more detail, the aligning roller 40 may include an elastomer material such as rubber. Accordingly, as the frictional force between the aligning roller 40 and each of the outermost electrode tabs 15a is maintained to be high, the aligning roller 40 may rotate with respect to the outermost electrode tab 15a without slipping. In addition, the aligning roller 40 may be elastically deformed while pressing the outermost electrode tab 15a and thus, occurrence of damage to the outermost electrode tab 15a may be prevented.

The pair of aligning rollers 40 may be disposed to be farther away from the electrode assembly 10 than the pair of tab guides 30 are. In more detail, a point at which the pair of aligning rollers 40 press the plurality of electrode tabs 15 may be farther away from the electrode assembly 10 than a point at which the pair of tab guides 30 press the plurality of electrode tabs 15 is.

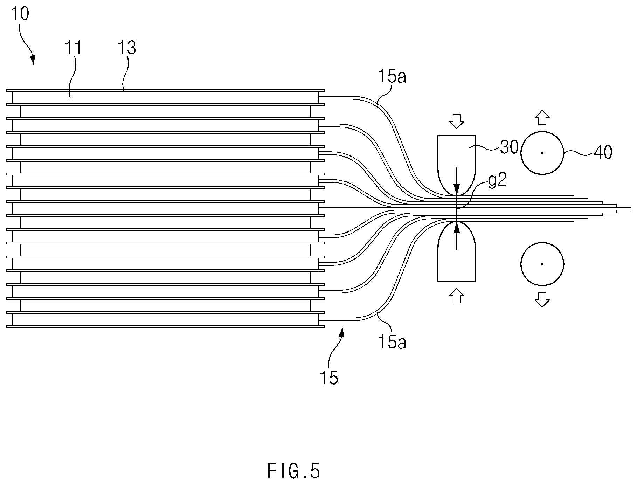

As illustrated in FIG. 5, the pair of tab guides 30 may more strongly press and fix the plurality of electrode tabs 15 after the plurality of electrode tabs 15 are aligned.

In more detail, when the pair of tab guides 30 have a first gap g1 therebetween, the pair of aligning rollers 40 may rotate in a state of pressing the plurality of electrode tabs 15, and when the pair of tab guides 30 have a second gap g2 smaller than the first gap g1 therebetween, the pair of aligning rollers 40 may be spaced apart from the plurality of electrode tabs 15.

When the pair of tab guides 30 have the first gap g1 therebetween, the pair of aligning rollers 40 may align the plurality of electrode tabs 15. When the aligning of the plurality of electrode tabs 15 is completed, the pair of tab guides 30 may approach each other and have the second gap g2 smaller than the first gap g1 therebetween.

When the pair of tab guides 30 have the first gap g1 therebetween, the plurality of electrode tabs 15 may be movable in the longitudinal direction without being completely fixed between the pair of tab guides 30. Thus, when the pair of aligning rollers 40 rotate, the plurality of electrode tabs 15 may be pushed inward between the pair of tab guides 30.

When the pair of tab guides 30 have the second gap g2 therebetween, the plurality of electrode tabs 15 may be fixed between the pair of tab guides 30. Accordingly, the plurality of electrode tabs 15 may be fixed between the pair of tab guides 30 in the aligned state.

When the plurality of electrode tabs 15 are fixed between the pair of tab guides 30, the pair of aligning rollers 40 may move so as to be away from each other, and be spaced apart from the plurality of electrode tabs 15.

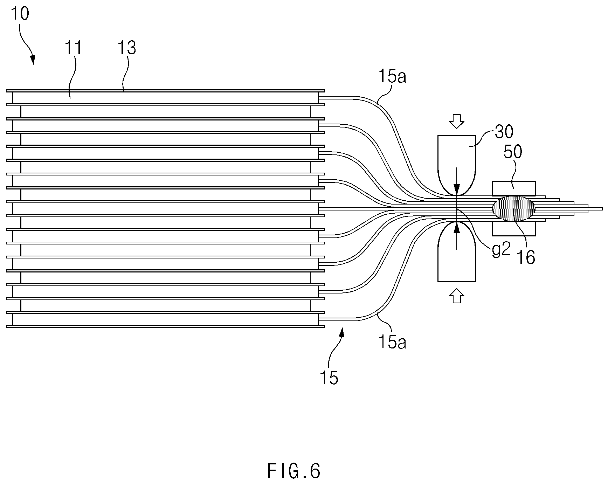

As illustrated in FIG. 6, the welding part 50 may weld the plurality of electrode tabs 15, which are aligned by the pair of aligning rollers 40, to each other so as to form a welded portion 16. The welded portion 16 may be a portion at which the plurality of electrode tabs 15 are welded to each other.

The welding part 50 may perform the welding in a state in which the plurality of electrode tabs 15 are fixed by the pair of tab guides 30. In more detail, the welding part 50 may weld the plurality of electrode tabs 15 to each other when the pair of tab guides 30 have the second gap g2 therebetween.

For example, the welding part 50 may perform ultrasonic welding on the plurality of electrode tabs 15. In this case, the welding part 50 may include an anvil, which is disposed at one side (e.g., a lower side) of the plurality of electrode tabs 15, and a horn which is disposed at the other side (e.g., an upper side) of the plurality of electrode tabs 15. The welding part 50 may be configured so that a distance between the anvil and the horn is adjusted. In a state in which the plurality of electrode tabs 15 are pressed between the anvil and the horn, the horn may undergo the ultrasonic vibration and thus, the plurality of electrode tabs 15 may be welded to each other.

The welding part 50 may be disposed to be farther away from the electrode assembly 10 than the pair of tab guides 30 are. In more detail, the welded portion 16 may be farther away from the electrode assembly 10 than the point at which the pair of tab guides 30 press the plurality of electrode tabs 15 is.

Hereinafter, an operation of the welding device according to this embodiment will be described.

As illustrated in FIG. 4, the pair of tab guides 30 approach each other and press the outermost electrode tabs 15a so as to gather the plurality of electrode tabs 15. Here, the pair of tab guides 30 may relatively weakly press the plurality of electrode tabs 15 so that the plurality of electrode tabs 15 are not completely fixed.

Next, the pair of aligning rollers 40 approach each other so as to press the outermost electrode tabs 15a, and rotate so that the outermost electrode tabs 15a are pushed toward the electrode assembly 10. Accordingly, the plurality of electrode tabs 15 are aligned while being pushed toward the electrode assembly 10 between the pair of tab guides 30. Since the more outward the electrode tab 15 is disposed, the more pushed the electrode tab 15 is, a stepped portion may occur between outer ends of the plurality of electrode tabs 15.

Then, as illustrated in FIG. 5, the pair of tab guides 30 approach each other and completely fix the plurality of electrode tabs 15, and the pair of aligning rollers 40 may move so that the pair of aligning rollers 40 are spaced apart from the outermost electrode tabs 15a, respectively, and away from each other.

Thereafter, as illustrated in FIG. 6, the welding part 50 welds the plurality of electrode tabs 15 to each other and form the welded portion 16.

As the welding part 50 welds the plurality of electrode tabs 15 to each other in a state in which the tab guides 30 fix the plurality of aligned electrode tabs 15, the electrode tab 15, particularly the outermost electrode tab 15a, may have an increased length L (see FIG. 8) from the electrode assembly 10 to the welded portion 16. That is, the length of the electrode tab 15, particularly of the outermost electrode tab 15a, may have a margin.

Accordingly, the electrode tab 15, particularly the outermost electrode tab 15a, may be prevented from being broken and disconnected by swelling of the electrode assembly 10, an external force applied to the electrode tab 15, or the like.

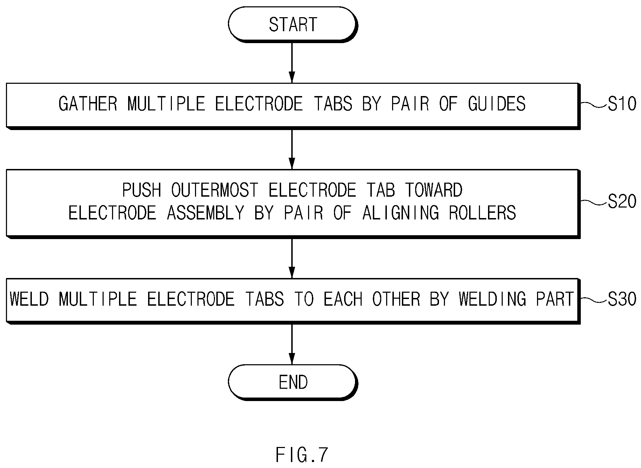

FIG. 7 is a flowchart of an electrode tab welding method according to the present invention.

Hereinafter, an electrode tab welding method using the electrode tab welding device described above will be described.

The electrode tab welding method according to the present invention welds a plurality of electrode tabs 15 of an electrode assembly 10 to each other. The electrode tab welding method includes allowing a pair of tab guides 30 to approach each other so as to gather the plurality of electrode tabs 15 (S10), allowing a pair of aligning rollers 40 to rotate in a state of pressing the plurality of electrode tabs 15 gathered by the pair of tab guides 30 so as to push the outermost electrode tab 15a toward the electrode assembly 10 (S20), and welding the plurality of electrode tabs 15, which are aligned by the pair of aligning rollers 40, to each other by a welding part 50 (S30).

In the gathering of the plurality of electrode tabs 15 (S10), the pair of tab guides 30 approach each other and press the outermost electrode tab 15a so as to gather the plurality of electrode tabs 15.

In the pushing of the outermost electrode tab 15a toward the electrode assembly 10 (S20), the pair of aligning rollers 40 approach each other so as to press the outermost electrode tab 15a, and rotate so that the outermost electrode tab 15a is pushed toward the electrode assembly 10.

When the pair of aligning rollers 40 rotate, the pair of tab guides 30 may have a first gap g1 therebetween. The pair of tab guides 30 having the first gap g1 therebetween may relatively weakly press the plurality of electrode tabs 15 so that the plurality of electrode tabs 15 are not completely fixed.

Accordingly, the plurality of electrode tabs 15 may be aligned while being pushed toward the electrode assembly 10 between the pair of tab guides 30 through a frictional force therebetween. Since the more outward the electrode tab 15 is disposed, the more pushed the electrode tab 15 is, a stepped portion may occur between outer ends of the plurality of electrode tabs 15.

In the welding of the plurality of electrode tabs 15 to each other (S30), the welding part 50 welds the plurality of electrode tabs 15 to each other and form the welded portion 16.

When the welding part 50 welds the plurality of electrode tabs 15 to each other, the pair of tab guides 30 may have a second gap g2 smaller than the first gap g1 therebetween. The pair of tab guides 30 having the second gap g2 therebetween may completely fix the plurality of electrode tabs 15. Accordingly, the plurality of electrode tabs 15 may be welded to each other by the welding part 50 in the state of being aligned with each other.

In addition, when the welding part 50 welds the plurality of electrode tabs 15 to each other, the pair of aligning rollers 40 may be spaced apart from the plurality of electrode tabs 15. For example, the electrode assembly 10 may be transferred from a first process position, at which the aligning rollers 40 are disposed, to a second process position at which the welding part 50 is disposed. Accordingly, the welding part 50 may weld the plurality of electrode tabs 15 to each other regardless of the position of the aligning rollers 40.

FIG. 8 is view illustrating an electrode assembly

Hereinafter, an electrode assembly 10 including a plurality of electrode tabs 15, which are welded by the electrode tab welding device or electrode tab welding method described above, will be described.

The electrode assembly 10 according to this embodiment may include a plurality of electrodes 11, which are stacked with each of a plurality of separators 13 therebetween, and a plurality of electrode tabs 15 which are connected to the plurality of electrodes 11, respectively, and welded to each other so as to form a welded portion 16. Both the outermost electrode tabs 15a of the plurality of electrode tabs 15 may be convexly bent outward.

At least some of the plurality of electrode tabs 15 may be provided to be convexly bent outward, and the more outward the electrode tab 15 is disposed, the more bent the electrode tab 15 may be. Thus, the outermost electrode tabs 15a may be bent most.

Each of the outermost electrode tabs 15a may have a longer length L from each of the electrodes 11 to the welded portion 16, compared to when the outermost electrode tab 15a is formed to be tight without bending. Accordingly, the outermost electrode tab 15a may be prevented from being broken and disconnected by swelling of the electrode assembly 10, an external force applied to the electrode tabs 15, or the like.

In more detail, the outermost electrode tab 15a may include a first section 151 extending from the electrode 11, and a second section 152 extending from the first section 151 and having a steeper slope than the first section 151. The outermost electrode tab 15a may further include a third section 153 extending from the second section 152 to the welded portion 16 and having a gentler slope than the second section 152. Such a configuration of the outermost electrode tab 15a may have characteristics obtained by welding the outermost electrode tab 15a in a state in which the outermost electrode tab 15a is pushed to an electrode assembly 10 side and aligned by an aligning roller 40.

The first section 151 may include a flat portion 151a, which is connected to the electrode 11 and provided to be flat, and a bending portion 151b which connects the flat portion 151a and the second section 152 to each other and is provided to be bent. That is, a point at which the outermost electrode tab 15a starts to bend may be spaced a predetermined gap from the electrode 11 with the flat portion 151a therebetween. Accordingly, there is an advantage that concentration of excessive stress is prevented from occurring in the outermost electrode tab 15a.

The outermost electrode tabs 15a may have an outer end that is stepped inward from outer ends of other electrode tabs 15. For example, the outer end of the outermost electrode tab 15a and an outer end of a center electrode tab may have a predetermined stepped portion S therebetween.

However, a cutting process, etc., for matching the outer ends of the plurality of electrode tabs 15 each other may be performed. In this case, the stepped portions may not be formed between the outer ends of the outermost electrode tab 15a and the outer ends of other electrode tabs 15.

### [Description of the Symbols]

| | | | |
|---|---|---|---|
| 10: | Electrode assembly | 11: | Electrode |
| 13: | Separator | 15: | Electrode tab |
| 15a: | Outermost electrode tab | 151: | First section |
| 151a: | Flat portion | 151b: | Bending portion |
| 152: | Second section | 153: | Third section |
| 16: | welded Portion | 30: | Tab guide |
| 40: | Aligning roller | 50: | Welding part |

## Claims

1. An electrode tab welding device that is configured to weld a plurality of electrode tabs (15) of an electrode assembly (10) to each other, the electrode tab welding device comprising:
a pair of tab guides (30) configured to gather the plurality of electrode tabs (15);
**characterized in that** the electrode tab welding device also comprises:
a pair of aligning rollers (40) configured to rotate in a direction, in which in use the outermost electrode tab (15) is pushed toward the electrode assembly (10), while pressing the plurality of electrode tabs (15) gathered by the pair of tab guides (30); and
a welding part (50) configured to weld the plurality of electrode tabs (15), which are aligned by the pair of aligning rollers (40), to each other.

2. The electrode tab welding device of claim 1, wherein a point at which the pair of aligning rollers (40) press the plurality of electrode tabs (15) is in use farther away from the electrode assembly (10) than a point at which the pair of tab guides (30) press the plurality of electrode tabs (15) is.

3. The electrode tab welding device of claim 1, the welding device being configured such that when the pair of tab guides (30) have a first gap (g1) therebetween, the pair of aligning rollers (40) are configured to rotate in a state of pressing the plurality of electrode tabs (15), and
when the pair of tab guides (30) have a second gap (g2) smaller than the first gap (g1) therebetween, the pair of aligning rollers (40) are configured to be spaced apart from the plurality of electrode tabs (15).

4. The electrode tab welding device of claim 3, the welding device being configured such that when the pair of tab guides (30) have the second gap (g2) therebetween, the welding part (50) is configured to weld the plurality of electrode tabs (15) to each other.

5. The electrode tab welding device of claim 1, wherein each of the pair of aligning rollers (40) comprises an elastomer material.

6. The electrode tab welding device of claim 1, wherein the pair of aligning rollers (40) are in use disposed to face each other with the plurality of electrode tabs (15) therebetween in a height direction of the electrode assembly (10), and are configured so that a distance therebetween can be adjusted.

7. An electrode tab welding method that welds a plurality of electrode tabs (15) of an electrode assembly (10) to each other, the electrode tab welding method comprising:
allowing a pair of tab guides (30) to approach each other so as to gather the plurality of electrode tabs (15);
allowing a pair of aligning rollers (40) to rotate in a state of pressing the plurality of electrode tabs (15) gathered by the pair of tab guides (30) so as to push the outermost electrode tab (15) of the plurality of electrode tabs (15) toward the electrode assembly (10); and
welding the plurality of electrode tabs (15), which are aligned by the pair of aligning rollers (40), to each other by a welding part (50).

8. The electrode tab welding method of claim 7, wherein, when the pair of aligning rollers (40) rotate, the pair of tab guides (30) have a first gap (g1) therebetween, and
when the welding part (50) welds the plurality of electrode tabs (15) to each other, the pair of tab guides (30) have a second gap (g2) smaller than the first gap (g1) therebetween.

9. The electrode tab welding method of claim 7, wherein, when the pair of aligning rollers (40) rotate, a stepped portion (S) occurs between outer ends of the plurality of electrode tabs (15).

10. The electrode tab welding method of claim 7, wherein, when the welding part (50) welds the plurality of electrode tabs (15), the pair of aligning rollers (40) are spaced apart from the plurality of electrode tabs (15).

## Patentansprüche

1. Elektrodenstreifen-Schweißvorrichtung, welche dazu eingerichtet ist, eine Mehrzahl von Elektrodenstreifen (15) einer Elektrodenanordnung (10) miteinander zu verschweißen, wobei die Elektrodenstreifen-Schweißvorrichtung umfasst:
ein Paar von Streifenführungen (30), welche dazu eingerichtet sind, die Mehrzahl von Elektrodenstreifen (15) zu erfassen;
**dadurch gekennzeichnet, dass** die Elektrodenstreifen-Schweißvorrichtung ferner umfasst:
ein Paar von Ausrichtungswalzen (40), welche dazu eingerichtet sind, in einer Richtung zu rotieren, in welcher der äußerste Elektrodenstreifen (15) bei einer Verwendung in Richtung der Elektrodenanordnung (10) gedrückt wird, während die Mehrzahl von Elektrodenstreifen (15) gepresst wird, welche durch das Paar von Führungen (30) erfasst worden ist; und
einen Schweißteil (50), welcher dazu eingerichtet ist, die Mehrzahl von Elektrodenstreifen (15), welche durch das Paar von Ausrichtungswalzen (40) ausgerichtet worden ist, miteinander zu verschweißen.

2. Elektrodenstreifen-Schweißvorrichtung nach Anspruch 1, wobei eine Stelle, an welcher das Paar von Ausrichtungswalzen (40) die Mehrzahl von Elektrodenstreifen (15) presst, bei einer Verwendung weiter weg von der Elektrodenanordnung (10) ist als eine Stelle, an welcher das Paar von Streifenführungen (30) die Mehrzahl von Elektrodenstreifen (15) presst.

3. Elektrodenstreifen-Schweißvorrichtung nach Anspruch 1, wobei die Schweißvorrichtung derart eingerichtet ist, dass, wenn das Paar von Streifenführungen (30) einen ersten Spalt (g1) dazwischen aufweist, das Paar von Ausrichtungswalzen (40) dazu eingerichtet ist, in einem Zustand eines Pressens der Mehrzahl von Elektrodenstreifen (15) zu rotieren, und
wobei, wenn das Paar von Streifenführungen (30) einen zweiten Spalt (g2) dazwischen aufweist, welcher kleiner als der erste Spalt (g1) ist, das Paar von Ausrichtungswalzen (40) dazu eingerichtet ist, von der Mehrzahl von Elektrodenstreifen (15) beabstandet zu sein.

4. Elektrodenstreifen-Schweißvorrichtung nach Anspruch 3, wobei die Schweißvorrichtung derart eingerichtet ist, dass, wenn das Paar von Streifenführungen (30) den zweiten Spalt (g2) dazwischen aufweist, der Schweißteil (50) dazu eingerichtet ist, die Mehrzahl von Elektrodenstreifen (15) miteinander zu verschweißen.

5. Elektrodenstreifen-Schweißvorrichtung nach Anspruch 1, wobei jede aus dem Paar von Ausrichtungswalzen (40) ein Elastomermaterial umfasst.

6. Elektrodenstreifen-Schweißvorrichtung nach Anspruch 1, wobei das Paar von Ausrichtungswalzen (40) bei einer Verwendung angeordnet ist, um einander zugewandt zu sein, mit der Mehrzahl von Elektrodenstreifen (15) in einer Höhenrichtung der Elektrodenanordnung dazwischen, und derart eingerichtet ist, dass ein Abstand dazwischen angepasst werden kann.

7. Elektrodenstreifen-Schweißverfahren, welches eine Mehrzahl von Elektrodenstreifen (15) einer Elektrodenanordnung (10) miteinander verschweißt, wobei das Elektrodenstreifen-Schweißverfahren umfasst:
Ermöglichen eines Paars von Streifenführungen (30) sich einander anzunähern, um die Mehrzahl von Elektrodenstreifen (15) zu erfassen;
Ermöglichen eines Paars von Ausrichtungswalzen (40) in einem Zustand eines Pressens der Mehrzahl von Elektrodenstreifen (15) zu rotieren, welche durch das Paar von Streifenführungen (30) erfasst wird, um den äußersten Streifen (15) der Mehrzahl von Elektrodenstreifen (15) in Richtung der Elektrodenanordnung (10) zu drücken; und
Verschweißen der Mehrzahl von Elektrodenstreifen (15), welche durch das Paar von Ausrichtungswalzen (40) ausgerichtet wird, miteinander durch einen Schweißteil (50).

8. Elektrodenstreifen-Schweißverfahren nach Anspruch 7, wobei, wenn das Paar von Ausrichtungswalzen (40) rotiert, das Paar von Streifenführungen (30) einen ersten Spalt (g1) dazwischen aufweist, und
wobei, wenn der Schweißteil (50) die Mehrzahl von Elektrodenstreifen (15) miteinander verschweißt, das Paar von Streifenführungen (30) einen zweiten Spalt (g2) dazwischen aufweist, welcher kleiner als der erste Spalt (g1) ist.

9. Elektrodenstreifen-Schweißverfahren nach Anspruch 7, wobei, wenn das Paar von Ausrichtungswalzen (40) rotiert, ein abgestufter Abschnitt (S) zwischen äußeren Enden der Mehrzahl von Elektrodenstreifen (15) auftritt.

10. Elektrodenstreifen-Schweißverfahren nach Anspruch 7, wobei, wenn der Schweißteil (50) die Mehrzahl von Elektrodenstreifen (15) verschweißt, das Paar von Ausrichtungswalzen (40) von der Mehrzahl von Elektrodenstreifen (15) beabstandet ist.

## Revendications

1. Dispositif de soudage de languettes d'électrodes qui est configuré pour souder une pluralité de languettes d'électrodes (15) d'un ensemble d'électrodes (10) les unes aux autres, le dispositif de soudage de languettes d'électrodes comprenant :
une paire de guides de languettes (30) configurés pour rassembler la pluralité de languettes d'électrodes (15) ;
**caractérisé en ce que** le dispositif de soudage de languettes d'électrodes comprend également :
une paire de rouleaux d'alignement (40) configurés pour tourner dans une direction, dans laquelle en utilisation la languette d'électrode (15) la plus extérieure est poussée vers l'ensemble d'électrodes (10), tout en appuyant sur la pluralité de languettes d'électrodes (15) rassemblées par la paire de guides de languettes (30) ; et
une partie de soudage (50) configurée pour souder la pluralité de languettes d'électrodes (15), qui sont alignées par la paire de rouleaux d'alignement (40), les unes aux autres.

2. Dispositif de soudage de languettes d'électrodes selon la revendication 1, dans lequel un point au niveau duquel la paire de rouleaux d'alignement (40) appuient sur la pluralité de languettes d'électrodes (15) est en utilisation plus éloigné de l'ensemble d'électrodes (10) qu'un point au niveau duquel la paire de guides de languettes (30) appuient sur la pluralité de languettes d'électrodes (15).

3. Dispositif de soudage de languettes d'électrodes selon la revendication 1, le dispositif de soudage étant configuré de telle sorte que, lorsque la paire de guides de languettes (30) ont un premier interstice (g1) entre ceux-ci, la paire de rouleaux d'alignement (40) sont configurés pour tourner dans un état d'appui sur la pluralité de languettes d'électrodes (15), et
lorsque la paire de guides de languettes (30) ont un second interstice (g2) plus petit que le premier interstice (g1) entre ceux-ci, la paire de rouleaux d'alignement (40) sont configurés pour être écartés de la pluralité de languettes d'électrodes (15).

4. Dispositif de soudage de languettes d'électrodes selon la revendication 3, le dispositif de soudage étant configuré de telle sorte que, lorsque la paire de guides de languettes (30) ont le second interstice (g2) entre ceux-ci, la partie de soudage (50) est configurée pour souder la pluralité de languettes d'électrodes (15) les unes aux autres.

5. Dispositif de soudage de languettes d'électrodes selon la revendication 1, dans lequel chacun de la paire de rouleaux d'alignement (40) comprend un matériau élastomère.

6. Dispositif de soudage de languettes d'électrodes selon la revendication 1, dans lequel la paire de rouleaux d'alignement (40) sont, en utilisation, disposés pour se faire face l'un l'autre avec la pluralité de languettes d'électrodes (15) entre ceux-ci dans une direction de hauteur de l'ensemble d'électrodes (10), et sont configurés de façon à ce qu'une distance entre ceux-ci puisse être ajustée.

7. Procédé de soudage de languettes d'électrodes qui soude une pluralité de languettes d'électrodes (15) d'un ensemble d'électrodes (10) les unes aux autres, le procédé de soudage de languettes d'électrodes comprenant :
permettre à une paire de guides de languettes (30) de s'approcher l'un de l'autre de manière à rassembler la pluralité de languettes d'électrodes (15) ;
permettre à une paire de rouleaux d'alignement (40) de tourner dans un état d'appui sur la pluralité de languettes d'électrodes (15) rassemblées par la paire de guides de languettes (30) de manière à pousser la languette d'électrode (15) la plus extérieure de la pluralité de languettes d'électrodes (15) vers l'ensemble d'électrodes (10) ; et
souder la pluralité de languettes d'électrodes (15), qui sont alignées par la paire de rouleaux d'alignement (40), les unes aux autres par une partie de soudage (50).

8. Procédé de soudage de languettes d'électrodes selon la revendication 7, dans lequel, lorsque la paire de rouleaux d'alignement (40) tournent, la paire de guides de languettes (30) ont un premier interstice (g1) entre eux, et
lorsque la partie de soudage (50) soude la pluralité de languettes d'électrodes (15) les unes aux autres, la paire de guides de languettes (30) ont un second interstice (g2) plus petit que le premier interstice (g1) entre eux.

9. Procédé de soudage de languettes d'électrodes selon la revendication 7, dans lequel, lorsque la paire de rouleaux d'alignement (40) tournent, une partie étagée (S) apparaît entre des extrémités extérieures de la pluralité de languettes d'électrodes (15).

10. Procédé de soudage de languettes d'électrodes selon la revendication 7, dans lequel, lorsque la partie de soudage (50) soude la pluralité de languettes d'électrodes (15), la paire de rouleaux d'alignement (40) sont écartés de la pluralité de languettes d'électrodes (15).
